Europäisches Patentamt

European Patent Office

Office européen des brevets

(19)

(11) **EP 0 884 093 A1**

(12) **EUROPÄISCHE PATENTANMELDUNG**

(43) Veröffentlichungstag:
**16.12.1998 Patentblatt 1998/51**

(51) Int. Cl.⁶: $B01D\ 53/50$, $B01D\ 61/44$

(21) Anmeldenummer: 98110591.9

(22) Anmeldetag: **09.06.1998**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **13.06.1997 CH 1453/97**

(71) Anmelder:
**Von Roll Umwelttechnik AG**
**8005 Zürich (CH)**

(72) Erfinder:
• **Frey, Rudolf**
  **8307 Effretikon (CH)**
• **Ungricht, Thomas**
  **8050 Zürich (CH)**

(74) Vertreter:
**Patentanwälte**
**Schaad, Balass, Menzl & Partner AG**
**Dufourstrasse 101**
**Postfach**
**8034 Zürich (CH)**

(54) **Verfahren und Vorrichtung zur Rückgewinnung von Schwefelverbindungen aus Rauchgas**

(57) Das Verfahren zum Entfernen von Schwefeldioxid aus Rauchgas, insbesondere für in einer Abfallverbrennungsanlage anfallendes Rauchgas (R), verwendet eine Waschlösung enthaltend Alkalilauge, wobei das nach dem Waschen Alkalisulfat enthaltende Waschlösung einer Elektrodialyse unterworfen wird, wobei eine wässrige Alkalilaugenlösung und eine verdünnte Schwefelsäure gewonnen wird.

Fig. 1

EP 0 884 093 A1

## Beschreibung

Die Erfindung betrifft ein Verfahren zur Rückgewinnung von Schwefelverbindungen aus Rauchgas gemäss dem Oberbegriff von Anspruch 1. Die Erfindung betrifft weiter eine Vorrichtung zum Entfernen von Schwefeldioxid aus Rauchgas gemäss dem Oberbegriff von Anspruch 10.

Aus der Publikation "Chem.-Ing.-Tech. 67 (1995) Nr. 6, S. 731-739, VCH Verlagsgesellschaft mbH, D-69469 Weinheim" ist ein Verfahren zum Entfernen von Schwefeldioxid aus Rauchgas bekannt, bei welchem das Rauchgas mit einer Natronlauge enthaltenden Waschlösung gewaschen wird, wobei die Waschlösung, welche nach dem Waschen Natriumsulfat enthält, einer Elektrodialysezelle zuführt wird, welche die Waschlösung in eine Schwefelsäure und eine Natronlauge aufspaltet.

Dieses bekannte Verfahren weist den Nachteil auf, dass die Membranen der Elektrodialysezelle relativ schnell nicht mehr funktionsfähig sind, was einerseits zu kurzen Betriebszeiten führt und andererseits durch die auftretenden Stillstandzeiten und den notwendigen Ersatz der Membranen hohe Kosten verursacht. Die Ausführungsform der Elektrodialysezelle ist relativ teuer und weist zudem den Nachteil eines grossen elektrischen Energiebedarfs auf.

Aus den Druckschriften US 4,107,015 sowie US 4,552,635 sind weitere Verfahren zur Rückgewinnung von Schwefelverbindungen bekannt. Nachteilig an diesen bekannten Verfahren ist die Tatsache, dass sie zur Rückgewinnung von Schwefelverbindungen aus Rauchgas, insbesondere aus in einer Abfallverbrennungsanlage anfallendes Rauchgas nicht geeignet sind.

Es ist Aufgabe der vorliegenden Erfindung ein wirtschaftlich vorteilhafteres Verfahren sowie eine entsprechende Vorrichtung zur Rückgewinnung von Schwefelverbindungen aus Rauchgas unter Verwendung einer Lauge vorzuschlagen.

Diese Aufgabe wird gelöst mit einem Verfahren aufweisend die Merkmale von Anspruch 1. Die Unteransprüche 2 bis 8 beziehen sich auf weitere, vorteilhafte Ausgestaltungen des Verfahrens. Die Aufgabe wird weiter gelöst mit einer Vorrichtung aufweisend die Merkmale von Anspruch 10. Der Unteranspruch 11 bezieht sich auf eine weitere, vorteilhafte Ausgestaltung der Vorrichtung.

Die Aufgabe wird insbesondere durch ein Verfahren zur Rückgewinnung von Schwefelverbindungen aus Rauchgas gelöst, bei welchem das Rauchgas mit einer Alkalilauge enthaltenden Waschlösung gewaschen wird, und die nach dem Waschen Alkalisulfat enthaltende Waschlösung einer Elektrodialyse unterworfen wird, um aus der Waschlösung eine Schwefelsäure zu gewinnen, wobei die Waschlösung vorgängig der Elektrodialyse einer Vorreinigung unterzogen wird. Als Alkalilauge bzw. Alkalihydroxid ist eine Natronlauge, eine Kalilauge, eine Lithiumlauge oder ein Gemisch dieser Laugen geeignet. Entsprechend der verwendeten Lauge fällt nach dem Waschen Natriumsulfat, Kaliumsulfat, Lithiumsulfat oder ein Gemisch dieser Sulfate an.

Die Vorreinigung der Waschlösung bewirkt eine wesentlich längere Betriebszeit der Membranen der Elektrodialysezelle. Zur Vorreinigung ist insbesondere ein Anheben des pH-Wertes und/oder ein Filtrieren und/oder ein selektiver Ionenaustausch der Waschlösung geeignet.

In einem vorteilhaften Verfahrensschritt wird die Waschlösung vor der Elektrodialyse einer Entgasung unterzogen. Wird die Waschlösung direkt der Elektrodialysezelle zugeleitet, so erfolgt auf Grund der in der Elektrodialysezelle auftretenden Absenkung des pH-Wertes eine Ausgasung von Schwefeldioxid und Kohlendioxid, was äusserst unerwünschte Effekte darstellt, weil das austretende Schwefeldioxid eine Geruchsbelastung verursacht und zudem sehr korrosiv ist, und die Erzeugung von Kohlendioxid zusätzliche elektrische Energie erfordert. Die Entgasungsvorrichtung kann zum Beispiel als eine Vakuumpumpe ausgestaltet sein.

In einem vorteilhaften Verfahrensschritt wird der Waschlösung nach dem Waschen zusätzlich Sauerstoff, insbesondere in Form von Luft zugeführt, um allfällig in der Waschlösung vorhandenes Sulfit zu Sulfat zu oxidieren. Die Zugabe von Sauerstoff weist den weiteren Vorteil auf, dass der pH-Wert der Waschlösung W durch die Bildung von Sulfat sinkt, was das Gleichgewicht zwischen Hydrogencarbonat und Kohlendioxid in Richtung Kohlendioxid verschiebt. Dadurch kann Kohlendioxid aus der Waschlösung W vollständig entfernt werden.

In einer besonders vorteilhaften Ausführungsform des Verfahrens weist die Elektrodialysezelle ein Zweikammersystem auf. Im erfindungsgemässen Verfahren hat nur die Schwefelsäure als ein reines Produkt anzufallen, so dass keine vollständige Zerlegung der Waschlösung erforderlich ist. Nach dem Aufspalten von Alkalisulfat in Schwefelsäure liegt einerseits eine reine Schwefelsäure und andererseits eine wässrige, Alkalilauge enthaltende Lösung vor, welche der Waschlösung vorteilhafterweise wieder zugeführt wird. Ein Vorteil des Zweikammersystems ist darin zu sehen, dass die Elektrodialysezelle einen einfachen Aufbau mit gegenüber einem Dreikammersystem weniger Membranen aufweist, was einen kostengünstigeren Betrieb der Elektrodialysezelle erlaubt, da die Membranen periodisch durch neue zu ersetzen sind. Ein weiterer Vorteil des Zweikammersystems ist darin zu sehen, dass zum Betrieb, im Vergleich mit einem Dreikammersystem, wesentlich weniger elektrische Energie erforderlich ist, was einen kostengünstigen Betrieb des erfindungsgemässen Verfahrens ermöglicht.

In einem besonders vorteilhaften Verfahren wird die durch die Elektrodialyse gewonnene Schwefelsäure zur Absenkung des pH-Wertes der aus dem Verbrennungsvorgang anfallenden Schlacke verwendet, um deren Alkalität teilweise zu neutralisieren. Die durch die Elektrodialyse gewonnene, sehr rein vorliegende Schwefelsäure weist eine geringe Konzentration auf und ist daher zur Verwendung im Betrieb leicht zu handhaben. Das erfindungsgemässe Verfahren weist den Vorteil auf, dass die Schwefelsäure einerseits den Reifungsprozess der Schlacke beschleunigt, was die Umwelt entlastet, und andererseits eine Verwertung der Schwefelsäure ohne Umweltbelastung ermöglicht. Die vorliegende Schwefelsäure kann auch dazu verwendet werden, die aus dem Kessel oder einem Elektrofilter anfallende Flugasche durch eine saure Extraktion von Schwermetallen zu befreien. Die vorliegende Schwefelsäure kann generell zur Absenkung des pH-Wertes von in einer Verbrennungsanlagen anfallenden Abwässern verwendet werden, zum Beispiel um den pH-Wert des Abwassers vor dem Ablassen in einen Vorfluter oder in eine Kanalisation auf einen beispielsweise neutralen Wert zu bringen.

Ein weiterer Vorteil des erfindungsgemässen Verfahrens ist darin zu sehen, dass die verdünnte Schwefelsäure durch eine Umwandlung zu sehr reinem Gips oder durch eine Aufkonzentration wiederverwendbar ist. Der reine Gips ist verkäuflich und beispielsweise in der Bauindustrie oder für Spezialzwecke verwendbar.

In einer besonders vorteilhaften Ausgestaltung des Verfahrens wird die Alkalisulfat enthaltende Waschlösung vorerst einem Partikelabscheider zugeführt, um die Waschlösung von Partikeln zu reinigen, danach einem Ionentauscher zugeleitet und erst danach der Elektrodialysezelle zugeführt.

Weitere Vorteile des erfindungsgemässen Verfahrens sind darin zu sehen, dass nur eine minimale Menge des Neutralisationsmittels Alkalilauge verbraucht wird, dass nur Produkte entstehen, die ökologisch ungefährlich sind und daher problemlos einer weiteren Verwendung zuführbar sind, da diese Produkte keine toxischen Spurenstoffe wie Schwermetalle oder Dioxin enthalten, und dass kein Sulfat in das Abwasser gelangt. Durch die Rückgewinnung der Stoffe entsteht somit keine oder nur eine sehr geringe Umweltbelastung. Zudem sind alle Stoffe im Betrieb, beispielsweise einer Abfallverbrennungsanlage, verwendbar beziehungsweise wiederverwendbar, so dass kein Transport der Stoffe erforderlich ist.

Die Verwendung von Alkalilauge zum Waschen ermöglicht eine neutrale Nasswäschevorrichtung mit Füllkörpern auszustatten, was eine geringe Baugrösse der Nasswäschevorrichtung erlaubt.

Die Erfindung wird an Hand von drei Ausführungsbeispielen beschrieben. Es zeigen:

Fig. 1    ein schematisches Flussdiagramm einer Rauchgasreinigungsvorrichtung einer Abfallverbrennungsanlage;

Fig. 2    ein Flussdiagramm einer weiteren Rauchgasreinigungsvorrichtung mit Details der Elektrodialysezelle;

Fig. 3    ein Flussdiagramm einer weiteren Rauchgasreinigungsvorrichtung.

Die nachfolgenden Ausführungsbeispiele offenbaren die Verwendung von Natronlauge. Anstelle der Natronlauge könnte auch eine andere Alkalilauge, d.h. eine Kalilauge oder eine Lithiumlauge verwendet werden.

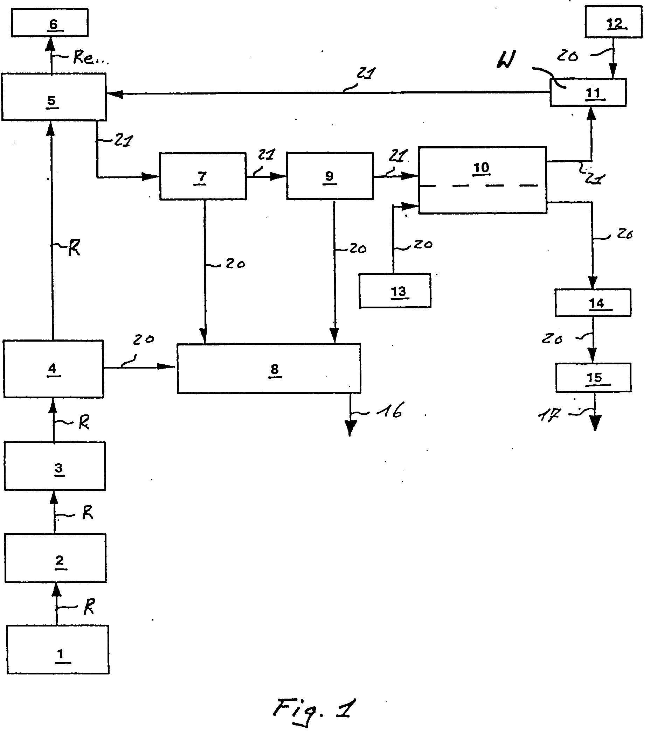

Das in Fig. 1 schematisch dargestellte Flussdiagramm einer Rauchgasreinigungsvorrichtung zeigt einen Rauchgasstrom R, der in einer Abfallverbrennungsanlage 1 erzeugt wird und nach dem Durchströmen mehrerer Behandlungsvorrichtungen einem Kamin 6 zugeführt wird. Nach dem Verlassen der Abfallverbrennungsanlage 1 wird dem Rauchgas R in einer Wärmetauscheranlage 2 ein Teil der Wärme entzogen. Das Rauchgas R wird daraufhin einer Entstaubungsvorrichtung 3 zugeführt, welche beispielsweise einen Schlauch- oder Elektrofilter aufweist. Das Rauchgas R durchströmt daraufhin eine saure Nasswäschevorrichtung 4, wo Schadstoffe wie HCl, HF oder Reste des Staubes ausgewaschen werden. Das derart vorgereinigte Rauchgas R wird daraufhin der neutralen Nasswäschevorrichtung 5 zugeführt, welche, beispielsweise als Füllkörperkolonne ausgebildet, mit Natronlauge als Neutralisationsmittel betrieben wird, so dass das Schwefeldioxid fast quantitativ abgeschieden wird. Das derart gereinigte Rauchgas R wird als Reingas $R_e$ dem Kamin 6 zugeführt.

Die Waschlösung W enthaltend Natronlauge als Neutralisationsmittel ist in einem Vorlagebehälter 11 gespeichert und wird über eine Zuleitung 21 der neutralen Nasswäschevorrichtung 5 zum Waschen des Rauchgases R zugeführt. Die Waschlösung W wird in der neutralen Nasswäschevorrichtung 5 sehr fein zerstaubt, so dass die zum Stoffübergang für das Rauchgas R zur Verfügung stehende Oberfläche der Waschlösung W stark vergrössert wird und dadurch, auch bei einer kleinen Baugrösse der Nasswäschevorrichtung 5, eine gute Abscheidung von Schwefeldioxid erzielt wird.

Vermutlich laufen die folgenden Reaktionen beim Waschvorgang ab:

a)

$$NaOH + SO_2 \rightarrow NaHSO_3$$

b)

$$NaHSO_3 + \tfrac{1}{2} O_2 + NaOH \rightarrow Na_2SO_4 + H_2O$$

Durch das Waschen des Rauchgases R entsteht in der Waschlösung W eine verdünnte, Natriumsulfat sowie Natriumsulfit enthaltende Lösung, welche über eine Ableitung 21 abgeführt und einem als Filter 7 ausgestalteten Partikelabscheider zugeführt wird. Das Filter 7 dient zum Entfernen von eventuell aus dem Rauchgas R ausgewaschenen Feststoffen. Im dargestellten Ausführungsbeispiel ist das Filter 7 als ein Kiesfilter 7 ausgestaltet. Das Kiesfilter 7 wird periodisch gereinigt wobei die durch die periodische Rückspülung des Kiesfilters 7 anfallende geringe Abwassermenge über eine Zuleitung 20 einer Abwasserbehandlungsanlage 8 zugeführt wird. Die Abwasserbehandlungsanlage 8 dient primär zur Aufnahme von Abwasser aus der sauren Nasswäschevorrichtung 4. Nach dem Durchströmen des Kiesfliters 7 wird die abgeführte Waschlösung über eine Leitung 21 einer selektiven Ionenaustaschvorrichtung 9 zugeführt, die alle zwei- und höherwertigen Kationen, wie zum Beispiel Cu, Mo, Pb, Zn, Cd, Fe, oder Al entfernt. Die beim Regenerieren des Ionentauscherharzes der Ionenaustauschvorrichtung 9 anfallende, mit Schwermetallen angereicherte Säure wird über eine Zuleitung 20 ebenfalls der Abwasserbehandlungsanlage 8 zugeführt. Nach dem Durchlaufen der Ionenaustaschvorrichtung 9 wird die abgeführte Waschlösung einer Elektrodialysezelle 10 zugeführt. Diese Elektrodialysezelle 10 weist mehrere Membraneinheiten auf, wobei jede Einheit aus zwei bipolaren Membranen und einer Anionentauschermembran besteht, wobei die Anionentauschermembran die Natriumsulfatlösung in Schwefelsäure und eine wässrige, Natronlauge enthaltende Lösung spaltet. Die mit unreagiertem Natriumsulfat vermischte, wässrige Lösung strömt über die Zuleitung 21 in den Vorlagebehälter 11 und kann über die Zuleitung 21 wieder als Natronlauge enthaltende Waschlosung W der neutralen Nasswäschevorrichtung 5 zugeführt werden. Der durch die Zuleitungen 21 ausgebildete Kreislauf der Waschlösung W weist einen geringen Verlust an Natronlauge auf. Um diesen Verlust zu kompensieren ist ein Natronlaugetank 12 über eine Zuleitung 20 mit dem Vorlagebehälter 11 verbunden, wobei eine nicht dargestellte Regelvorrichtung die Laugenkonzentration im Vorlagebehälter 11 misst und entsprechend geregelt Natronlauge aus dem Natronlaugetank 12 zuführt.

Die während der Elektrodialyse entstehende Schwefelsäure wird durch voll entsalztes Wasser, welches von einer Entsalzungsanlage 13 bereitgestellt wird, verdünnt und über eine Zuleitung 20 einem Vorratstank 14 und nachfolgend einer Verwertungstufe 15 zugeführt. Die Verwertungstufe 15 kann entweder als eine Neutralisationsstufe ausgebildet sein, so dass aus der Schwefelsäure Gips 17 gebildet wird. Die Verwertungstufe 15 kann auch als eine Eindampfanlage ausgebildet sein, so dass eine aufkonzentrierte Schwefelsäure 17 einer weiteren Verwertung zugeführt werden kann. Die Verwertungsstufe 15 kann auch dazu dienen die verdünnte Schwefelsäure zur Verbesserung der Schlackenqualität zu verwenden. Die verdünnte Schwefelsäure wird dabei einem Nassentschlacker zugesetzt, so dass die Alkalltät der Schlacke teilweise neutralisiert wird. Die in der Schlacke enthaltenden Calciumverbindungen reagieren dabei zu Gips. Dadurch kann der Alterungsprozess der Schlacke beschleunigt werden, da eine frische Schlacke eine hohe Alkalität mit einem Eluattest pH-Wert von über 12 aufweist. Durch das Beifügen der verdünnten Schwefelsäure kann die Auslaugung von amphoteren Schwermetallen, die bei hohen pH-Werten Anionen bilden, wie zum Beispiel Blei, stark reduziert werden. Als anzustrebende Zielgrösse für die Teilneutralisation der Schlacke gilt eine Senkung des pH-Wertes im Schlackeneluat nach DEVS4 (DIN 38414 Teil 4) von üblichen Werten grösser als 12 auf Zielwerte von 9 bis 11.

Die Abwasserbehandlungsanlage 8 weist einen Ablauf 16 auf, welcher in eine Abwassereinleitung oder in eine Eindampfanlage mündet.

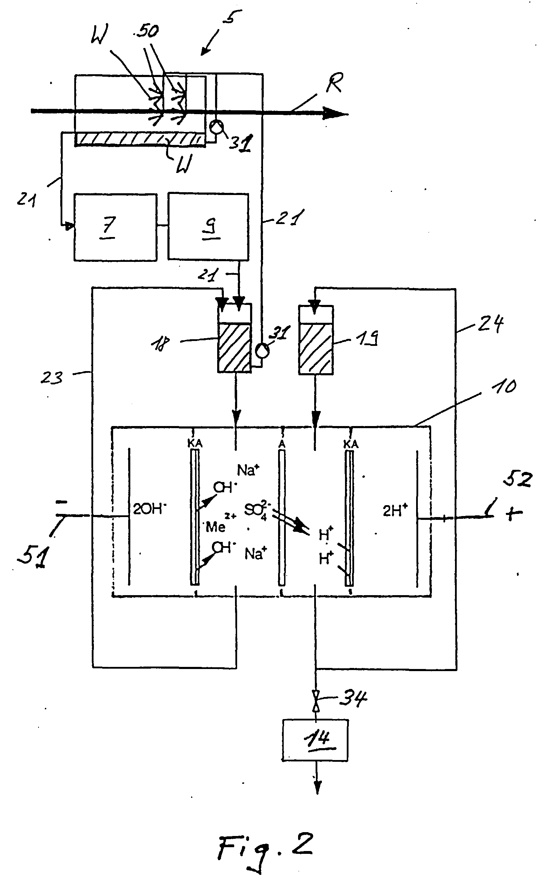

Fig. 2 zeigt ein Flussdiagramm einer weiteren Rauchgasreinigungsvorrichtung mit Details der Elektrodialysezelle 10, welche mit bipolaren Membranen ausgestattet ist und einen Zweikammeraufbau mit zwei Kathoden KA und einer Anode A aufweist. Diese Elektrodialysezelle 10 erlaubt die sauren Sulfatbestandteile gegen alkalische Hydroxide kontinuierlich auszutauschen und die abgetrennten Sulfate in protonierter Form als Schwefelsäure-Produkt zu gewinnen. Die der neutralen Nasswäschevorrichtung 5 über die Leitung 21 abgeführte Waschlösung W wird zuerst einem Kerzenfilter 7 zugeführt, was eine weitgehende Partikelfreiheit der Waschlösung W bewirkt, und nachträglich einer selektiven Ionenaustauschvorrichtung 9 zugeführt, welcher vorhandene mehrwertige Schwermetallkationen entfernt. Daraufhin wird die abgeführte Waschlösung über einen Vorratsbehälter 18 der Elektrodialysezelle 10 zugeführt. Die Elektrodialysezelle 10 wird mit Strom betrieben und weist elektrische Anschlüsse 51 und 52 auf, an welchen während dem Betrieb eine Spannung anliegt. Die im Vorratsbehälter 18 gespeicherte Lösung wird der Elektrodialysezelle 10 zugeführt und das alkalisierte Natriumsulfat nach dem Verlassen der Elektrodialysezelle 10 über die Leitung 23 wieder dem Vorratsbehälter 18 zugeführt. Die die Elektrodialysezelle 10 verlassende Schwefelsäure wird über die Leitung 24 wieder dem Vorratsbehälter 19 zugeführt oder kann durch ein Öffnen des Ventils 34 einem nachgelagerten Speicherbehälter 14 zugeführt werden. Die im Vorratsbehälter 18 gespeicherte Lösung kann über eine Zuleitung 21 mit Pumpe 31 wieder der neutralen Nasswäschevorrichtung 5 zugeführt werden, wobei im dargestellten Ausführungsbeispiel die Waschlösung W über Sprühvorrichtungen 50 in den Rauchgasstrom R eingeleitet wird. Im dargestellten Ausführungsbeispiel wird die Waschlösung W durch eine Pumpe 31 zusätzlich in der Nasswäschevorrichtung 5 umgewälzt. Auf diese Umwälzung konnte auch verzichtet werden, so dass die gesamte Waschlösung W nach dem Versprühen und Waschen des Rauchgases R dem Filter 7 zugeführt wird.

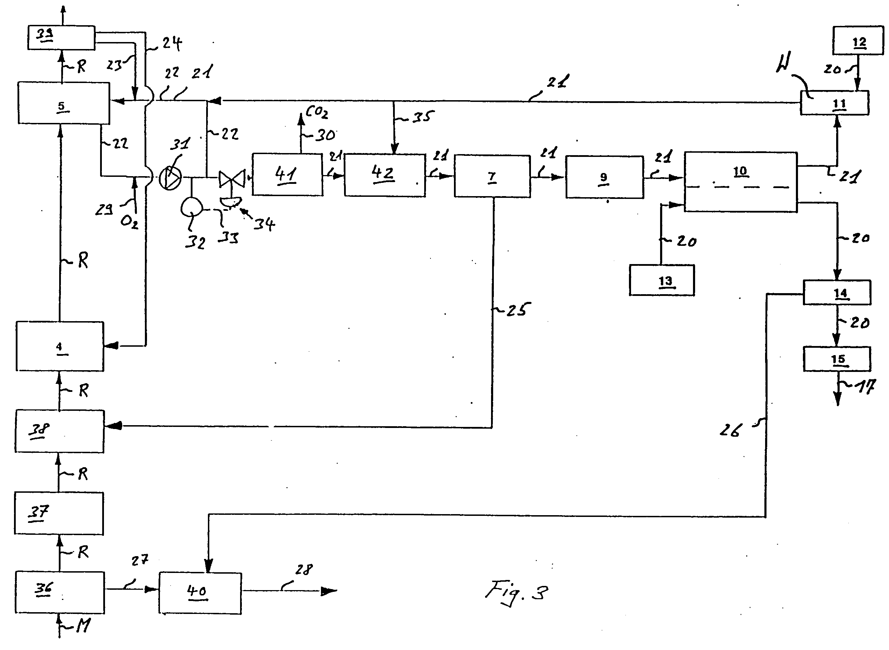

Das in Figur 3 dargestellte Flussdiagramm eines weiteren Ausführungsbeispieles einer Rauchgasreinigungsvorrichtung zeigt den einer Feuerung 36 zugeführte Müll M, wobei die aus der Verbrennung anfallende Schlacke 28 über eine Leitung 27 einer Nassentschlackung 40 zugeführt wird, und wobei die in der Verbrennung anfallenden Rauchgase R einem Kessel 37, anschliessend einer Quenchstufe 38, weiter einer sauren Nasswäschevorrichtung 4, anschliessend einer neutralen Nasswäschevorrichtung 5 und weiter einer Waschstufe 39, beispielsweise einer Ringjet-Stufe zugeführt wird, bevor das Rauchgas einer weiteren, nicht dargestellten Stufe oder einem Kamin zugeführt wird. Das Rauchgas R wird in der Quenchstufe 38 mit Wasser gekühlt, wobei Halogenwasserstoffe wie HCl, HF usw., Staub und Hg ausgewaschen werden. In der nachfolgenden, sauren Füllkörperstufe 4 werden verbleibende Halogenwasserstoffe ausgewaschen. Die Ringjet-Stufe 39 dient zum Auswaschen von Feinststäuben. Vorteilhafterweise wird diese Stufe mit enthärtetem Wasser betrieben. Der Waschstufe 39 nachgeordnet könnte zum Beispiel noch eine Abgas-Nachreinigung, beispielsweise mittels einer Aktivkohle-Dosierung, einem Tuchfilter oder einem SCR-Verfahren angeordnet sein.

Die in Fig. 3 und Fig. 1 identischen Bezugsseichen betreffen dieselben Vorrichtungsgegenstände, so dass der rechte Teil von Fig. 3 ab dem Filter 7 bereits aus der Beschreibung von Fig. 1 bekannt ist und daher nicht mehr im Detail beschrieben wird. Gegenüber dem Ausführungsbeispiel gemäss Fig. 1 weist die Rauchgasreinigungsvorrichtung gemäss Fig. 3 im Kreislauf 21, dem Filter 7 in Fliessrichtung der Waschlösung W vorgeschaltet, eine Entgasungsvorrichtung 41 sowie eine Neutralisationsvorrichtung 42 auf. Zudem ist ein Flüssigkeitskreislauf 22 ausgebildet. Der Waschlösung W wird nach dem Verlassen der Füllkörperstufe 5 über eine Zuleitung 29 Sauerstoff in Form von beispielsweise Luft zugeführt, um das in der Waschlösung W befindliche Natriumsulfit zu Natriumsulfat zu oxidieren. Die Waschlösung W wird durch die Pumpe 31 im Flüssigkeitskreislauf 22 gefördert, wobei eine Leitfähigkeitsmessvorrichtung 32 den pH-Wert dieser Waschlösung W erfasst und mit einem nicht dargestellten Regler über eine elektrische Zuleitung 33 das Ventil 34 derart angesteuert, dass die im Flüssigkeitskreislauf 22 zirkulierende Waschlösung W einen vorgebbaren pH-Wert aufweist. Die über das Ventils 34 dem Flüssigkeitskreislauf 22 entnommene Waschlösung W wird der Entgasungsvorrichtung 41 zugeführt, welche, beispielsweise als eine Vakuumpumpe ausgestaltet, der Waschlösung W Kohlendioxid entzieht und dieses über eine Ableitung 30 an die Umwelt entlässt. In einer der Entgasungsvorrichtung 41 nachfolgend angeordneten Neutralisationsvorrichtung 42 wird der pH-Wert der Waschlösung W abgesenkt, um eine Ausfällung von Schwermetallen zu bewirken. In einer vorteilhaften Ausgestaltung wird ein Teil der dem Vorlagebehälter 11 entnommenen, sauren Waschlösung W der Neutralisationsvorrichtung 42 zum Ansäuern der Waschlösung W zugeführt. Die derart entgaste und von Schwermetallen gereinigte Waschlösung W wird daraufhin dem Filter 7 zugeleitet. Die im Filter 7 ausgefällten Feststoffe der Waschlösung W werden über eine Leitung 25 der Quenchstufe 38 zugeleitet.

In einer vorteilhaften Ausgestaltung wird der Ringjet-Stufe 39 enthärtetes Wasser zugeführt, welches über die Zuleitung 23 dem Flüssigkeitskreislauf 22 zugeführt wird, um einen Flüssigkeitsverlust in der Nasswäschevorrichtung 5 auszugleichen und eine für die Elektrodialyse optimale, relativ hohe Konzentration an Natriumsulfat von beispielsweise 3% bis 10% zu gewährleisten, als auch einen minimalen Eintrag an störenden Ca-Ionen in die Waschflüssigkeit W zu gewährleisten.

Vorteilhafterweise wird die Konzentration an Natronlauge der im Vorlagebehälter 11 gespeicherten Waschlösung W über den an die Elektrodialysezelle 10 angelegten Strom beziehungsweise die Spannung gesteuert. In einer Ausführungsform des erfindungsgemässen Verfahrens kann auf den Vorlagebehälter 11 verzichtet werden, in dem die für den Flüssigkeitskreislauf 22 erforderliche Konzentration an Natronlauge über den an der Elektrodialysezelle 10 angelegten Strom beziehungsweise Spannung geregelt wird. Dazu ist eine Regelvorrichtung sowie nicht dargestellte Sensoren zur Messung des pH-Wertes erforderlich.

Der pH-Wert der geförderten Flüssigkeiten kann an unterschiedlichen Stellen gemessen werden, um mit Hilfe dieser Messewerte und einer entsprechenden Regelvorrichtung die im Flüssigkeitskreislauf 22 zirkulierende Waschflüssigkeit W oder die dem Flüssigkeitskreislauf 22 über die Zuleitung 21 zugeführte Menge Waschflüssigkeit oder die durch die Elektrodialyse erzeugte Menge Natronlauge beziehungsweise den pH-Wert zu regeln.

Im Ausführungsbeispiel gemäss Fig. 1 könnte, wie in Fig. 3 dargestellt, zwischen der neutralen Nasswäschevorrichtung 5 sowie dem Filter 7 eine Entgasungsvorrichtung 41 zur Desorption der Waschlösung sowie nachfolgend eine Neutralisationsvorrichtung 42 zur Alkalisierung der Waschlösung angeordnet sein.

**Patentansprüche**

1.  Verfahren zur Rückgewinnung von Schwefelverbindungen aus Rauchgas, insbesondere aus in einer Abfallverbrennungsanlage anfallendes Rauchgas (R), wobei das Rauchgas (R) mit einer Alkalilauge, insbesondere Natronlauge enthaltenden Waschlösung (W) gewaschen wird, und die nach dem Waschen Alkalisulfat, insbesondere Natriumsulfat enthaltende Waschlösung (W) einer Elektrodialyse unterworfen wird, um aus der Waschlösung (W) Schwefelsäure zu gewinnen, dadurch gekennzeichnet, dass die Waschlösung (W) vor der Elektrodialyse einer Vorreinigung unterzogen wird.

2. Verfahren nach Anspruch 1, dadurch gekennzeichnet, dass zur Vorreinigung der Waschlösung (W) deren pH-Wert angehoben wird und/oder die Waschlösung (W) filtriert wird und/oder in der Waschlösung (W) enthaltene zwei- und höherwertige Kationen ausgetauscht werden.

3. Verfahren nach einem der vorhergehenden Ansprüche, dadurch gekennzeichnet, dass die Waschlösung (W) vor der Elektrodialyse einer Entgasung unterzogen wird.

4. Verfahren nach einem der vorhergehenden Ansprüche, dadurch gekennzeichnet, dass der Waschlösung (W) nach dem Waschen zusätzlich Sauerstoff, insbesondere in Form von Luft zugeführt wird, damit allfällig vorhandenes Sulfit zu Sulfat oxidiert wird.

5. Verfahren nach einem der vorhergehenden Ansprüche, dadurch gekennzeichnet, dass die Elektrodialyse in einer Elektrodialysezelle aufweisend ein Zweikammersystem durchgeführt wird.

6. Verfahren nach einem der vorhergehenden Ansprüche, dadurch gekennzeichnet, dass die durch die Elektrodialyse erzeugte Alkalilaugenlösung der Waschlösung (W) rezirkuliert wird.

7. Verfahren nach einem der vorhergehenden Ansprüche, dadurch gekennzeichnet, dass die Schwefelsäure in einer Neutralisationsstufe zu Gips, insbesondere zu reinem Gips, umgesetzt wird.

8. Verfahren nach einem der vorhergehenden Ansprüche, dadurch gekennzeichnet, dass die Schwefelsäure zur Absenkung des pH-Wertes einer bei der Verbrennung, insbesondere der Müllverbrennung anfallenden Schlacke zugeführt wird.

9. Verfahren nach einem der vorhergehenden Ansprüche, dadurch gekennzeichnet, dass die Alkalilaugenkonzentration der erzeugten Alkalilaugenlösung über die der Elektrodialysezelle angelegten Spannung gesteuert wird.

10. Vorrichtung zur Durchführung des Verfahrens nach einem der Ansprüche 1 bis 8, dadurch gekennzeichnet, dass eine Nasswäschevorrichtung (5) mit Zuführleitungen (21) verbunden ist, welche einen Kreislauf zum Fördern einer Waschlösung (W) ausbilden, dass bezüglich der Strömungsrichtung der Waschlösung (W) zwischen zwei Zuführleitungen (21) vorgängig eine Reinigungsvorrichtung (42,7,9) und nachfolgend eine ein Zweikammersystem aufweisende Elektrodialysezelle (10) angeordnet ist.

11. Vorrichtung nach Anspruch 10, dadurch gekennzeichnet, dass im Kreislauf zum Fördern der Waschlösung (W) vorgängig der Reinigungsvorrichtung (42,7,9) eine Entgasungsvorrichtung (41) angeordnet ist.

Fig. 1

Fig. 2

Fig. 3

EP 0 884 093 A1

# EP 0 884 093 A1

**Europäisches Patentamt**

# EUROPÄISCHER RECHERCHENBERICHT

Nummer der Anmeldung

EP 98 11 0591

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X<br>A | US 4 552 635 A (JENCZEWSKI THEODORE J ET AL) 12. November 1985<br><br>* das ganze Dokument *<br>* Abbildung 1 *<br>--- | 1-6,10,11<br>7-9 | B01D53/50<br>B01D61/44 |
| X<br><br>A | US 4 107 015 A (CHLANDA FREDERICK P ET AL) 15. August 1978<br><br>* Spalte 2, Zeile 3 - Zeile 28 *<br>* Abbildung 1 *<br>--- | 1,3,6,7<br><br>2,8,10,11 | |
| A,D | F.-F. KUPPINGER, W. NEUBRAND, H.-J. RAPP, G. EIGENBERGER: "Elektromembranverfahren Teil 2: Anwendungsbeispiele"<br>CHEM.-ING.-TECH.,<br>Bd. 67, Nr. 6, 1995, Seiten 731-739,<br>XP002051515<br>D-69469-WEINHEIM<br>* das ganze Dokument *<br>--- | 1,4,6 | |
| A | PATENT ABSTRACTS OF JAPAN<br>vol. 095, no. 005, 30. Juni 1995<br>& JP 07 031842 A (ASAHI GLASS CO LTD),<br>3. Februar 1995<br>* Zusammenfassung *<br>--- | 1-11 | **RECHERCHIERTE SACHGEBIETE (Int.Cl.6)**<br><br>B01D |
| A | PATENT ABSTRACTS OF JAPAN<br>vol. 095, no. 011, 26. Dezember 1995<br>& JP 07 204457 A (ASAHI GLASS CO LTD),<br>8. August 1995<br>* Zusammenfassung *<br>----- | 1,7 | |

Der vorliegende Recherchenbericht wurde für alle Patentansprüche erstellt

| Recherchenort | Abschlußdatum der Recherche | Prüfer |
|---|---|---|
| DEN HAAG | 21. September 1998 | Borello, E |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)